(19) Europäisches Patentamt
European Patent Office
Office européen des brevets

(11) Veröffentlichungsnummer: **0 054 925**
**B1**

(12) **EUROPÄISCHE PATENTSCHRIFT**

(45) Veröffentlichungstag der Patentschrift: **16.05.84**

(51) Int. Cl.³: **C 09 D 5/40**, C 25 D 13/06, H 01 B 3/30

(21) Anmeldenummer: **81110559.2**

(22) Anmeldetag: **18.12.81**

(54) **Kathodisch abscheidbares, wässriges Elektrotauchlack-Überzugsmittel, dessen Verwendung und Verfahren zum Lackieren von elektrischen Leitern.**

(30) Priorität: **23.12.80 DE 3048664**

(43) Veröffentlichungstag der Anmeldung: **30.06.82 Patentblatt 82/26**

(45) Bekanntmachung des Hinweises auf die Patenterteilung: **16.05.84 Patentblatt 84/20**

(84) Benannte Vertragsstaaten: **AT CH DE FR GB IT LI NL SE**

(56) Entgegenhaltungen:
**DE - A - 2 248 836**
**US - A - 3 702 813**

(73) Patentinhaber: **Herberts Gesellschaft mit beschränkter Haftung, Christbusch 25, D-5600 Wuppertal 2 (DE)**

(72) Erfinder: **Patzschke, Hans-Peter, Dr. Chem., Am Heckendorn 71, D-5600 Wuppertal 2 (DE)**
Erfinder: **Merchant, Suresh, Dr. Chem., Röpke 14, D-5600 Wuppertal 1 (DE)**

(74) Vertreter: **Türk, Dietmar, Dr. rer. nat. et al, Redies, Redies, Türk & Gille Patentanwälte Brucknerstrasse 20, D-4000 Düsseldorf 13 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

EP 0 054 925 B1

# Kathodisch abscheidbares, wäßriges Elektrotauchlack-Überzugsmittel, dessen Verwendung und Verfahren zum Lackieren von elektrischen Leitern

Die vorliegende Erfindung betrifft ein kathodisch abscheidbares, wäßriges Elektrotauchlack-Überzugsmittel, das ein kationisches Kunstharzbindemittel, welches durch Protonisieren mit Säuren wasserlöslich gemacht werden kann, und ein nichtionisches Kunstharz-Bindemittel enthält, und dessen Verwendung zum Beschichten von als Kathode geschalteten elektrischen Leitern. Die Erfindung betrifft außerdem ein Verfahren zum Lackieren von elektrischen Leitern unter Verwendung dieses Überzugsmittels.

Elektrische Leiter, insbesondere sogenannten Wickeldrähte, werden in größtem Umfang mit Einbrennlacken lackiert, die organische Lösungsmittel, Bindemittel und lacktechnische Zusatzmittel einschließlich Katalysatoren zum Vernetzen der Bindemittel enthalten. Die elektrischen Leiter werden mit diesen Lacken beschichtet und dann auf Temperaturen auf über etwa 200° C Objekttemperatur erhitzt, um unter Vernetzung die Lacke einzubrennen. Das Beschichten und Einbrennen wird mehrfach wiederholt, um genügende Schichtdicken zu erlangen. Besonders große technische Bedeutung haben auf diesem Gebiet die Polyesterimidharze erlangt (vgl. GB-A 9 37 377, 10 82 181, 10 67 541, 10 67 542; DE-A 15 20 061, 15 20 068, 14 94 452, 14 94 454, 14 94 457, 19 37 311, 19 37 312, 19 57 157, 16 45 435, usw.).

Die auf den elektrischen Leitern, insbesondere Kupferdraht, eingebrannten Lackfilme der bekannten Polyesterimidharze weisen eine ausgezeichnete thermische Stabilität, gute Elastizität, gute Lösungsmittelbeständigkeit und gutes Verhalten im Wärmeschock auf. Von Bedeutung sind auch Polyesteramidimide, vergl. die oben erwähnte DE-A 14 94 457. Ebenfalls als Drahtlackharze bekannt sind Polyhydantoine (DE-A 18 14 497).

Um den Einsatz gesundheitsgefährdender Lösungsmittel, wie Kresol, zu vermeiden, die in den bekannten Einbrennlacken in der Regel eingesetzt werden, wurde versucht, wasserverdünnbare Drahtlackharze anodisch abzuscheiden. Aufgrund des hohen Schichtwiderstandes der abgeschiedenen Filme werden jedoch nur dünne Schichten erhalten. In der DE-A 21 11 584 und 21 11 640 wird daher folgerichtig vorgeschlagen, durch Zusatz von niedrigmolekularen Säuren oder durch einen niedrigeren Neutralisationsgrad diese Fehler zu beheben. Als Bindemittel werden dabei Polyesterimide oder Polyamidimide verwendet, die eine hohe Zahl von Carboxylgruppen frei in der Molekülkette des Harzes verteilt enthalten. Dieser chemische Aufbau führt zu einer elektrochemischen Auflösung an der Oberfläche des metallenen Werkstückes an der Anode, d. h. ein Kupferdraht nimmt eine graue bis grüne Verfärbung an.

In der DE-A 21 06 762 wird eine ausreichende Schichtdicke dadurch erhalten, daß erst eine Harzdispersion bei niedriger Spannung und dann ein wasserverdünnbarer Lack mit hohem Schichtwiderstand bei höherer Spannung nacheinander nach dem Elektrotauchverfahren abgeschieden werden. Die Schwierigkeit bei diesem Verfahren liegt darin, daß zur Herstellung der Harzdispersion Emulgatoren zugesetzt werden müssen, die im Film verbleiben, und daß beim Abspülen der abgeschiedenen Harzdispersion eine mehr oder weniger starke Ablösung der abgeschiedenen Schicht auftritt. Es werden keine Polyesterimide, Polyamidimide oder Polyhydantoine eingesetzt.

In der DE-A 22 48 836 und 28 42 626 werden Verfahren zum elektrophoretischen Abscheiden kationischer Harze zusammen mit einem weiteren Harz aus einer wäßrigen Dispersion beschrieben, die zu höheren Schichtdicken führen und keine Metallauflösung zeigen. Es werden dabei pulverförmige, nichtionische synthetische Harze in ein kationisches Bindemittel eindispergiert und an der Kathode gemeinsam abgeschieden. Aufgrund des chemischen Aufbaus haben die darin beschriebenen Harze keine Eigenschaften, die für eine Drahtlackierung geeignet wären. Die Herstellung des eindispergierten mikronisierten Pulvers ist außerordentlich aufwendig.

Der vorliegenden Erfindung liegt die Aufgabe zugrunde, ein Elektrotauchlack-Überzugsmittel zu finden, das geeignet ist für die Lackierung von elektrischen Leitern, insbesondere Kupferdrähten. Es wurde nun überraschenderweise gefunden, daß das nachfolgend definierte Überzugsmittel diese Aufgabenstellung löst.

Gegenstand der vorliegenden Erfindung ist demgemäß ein kathodisch abscheidbares, wäßriges Elektrotauchlack-Überzugsmittel, das ein kationisches Kunstharz-Bindemittel, welches durch Protonisieren mit Säuren wasserlöslich gemacht werden kann, und ein nichtionisches Kunstharz-Bindemittel enthält, das dadurch gekennzeichnet ist, daß es

A. als kationisches Kunstharz-Bindemittel ein aminogruppenhaltiges Trägerharz mit einer Aminzahl von 50 bis 200 und einer Hydroxylzahl von 50 bis 400,
B. als nichtionisches Kunstharz-Bindemittel ein wasserunlösliches Drahtlackharz aus der Gruppe Polyesterimide, Polyesteramidimide und Polyhydantoine mit einem Schmelzpunkt über 60° C in einer Menge von 50 bis 2000 Gewichtsteilen pro 100 Gewichtsteile Komponente A, und
C. in Wasser im wesentlichen stabile Umesterungskatalysatoren in einer Menge von 0,1 bis 5 Gewichtsteilen pro 100 Gewichtsteile der Summe der Komponenten A und B,

enthält.

Das Überzugsmittel gemäß der Erfindung ist eine stabile wäßrige Dispersion, die beim Abscheiden

durch Anlegen einer Spannung im Elektrotauchverfahren äußerst geringe Elektrolyseerscheinungen hervorruft und einen Film in ausreichender Schichtdicke ergibt, wobei an der Grenzfläche praktisch kein Metall aufgelöst wird. Nach dem Einbrennen besitzt der Überzug Eigenschaften, die an eine Drahtlackierung gestellt werden.

Die Herstellung des Überzugsmittels ist in äußerst einfacher Weise möglich. Das wasserunlösliche Drahtlackharz und das neutralisierte kationische Kunstharz-Bindemittel lassen sich zusammen leicht in Wasser dispergieren. Dazu kann das wasserunlösliche Drahtlackharz in dem wasserlöslichen Trägerharz bei höheren Temperaturen eingeschmolzen oder darin aufgelöst werden, eventuell unter Zusatz von geringen Mengen organischer Lösungsmittel. Anschließend wird mit Säuren neutralisiert und mit Wasser allmählich verdünnt, wobei das wasserunlösliche Harz in feiner Verteilung ausfällt. Es ist dabei darauf zu achten, daß durch zu große Portionen Wasser kein Fällungsschock ausgelöst wird. Es hat sich als zweckmäßig erwiesen, zuerst die Säure, eventuell unter Zusatz einer gleich großen Menge Wasser, einzurühren, und dann das restliche Wasser in steigenden Mengen, die etwa einer geometrischen Reihe entsprechen, zuzusetzen. Die Stabilität wird außerdem durch das eingesetzte Lösungsmittel beeinflußt, wobei im allgemeinen solche wassermischbaren Lösungsmittel eingesetzt werden, die nach Verdünnen mit Wasser die Komponente B weder anlösen noch anquellen.

Das Eindispergieren des wasserunlöslichen Drahtlackharzes kann auch dadurch erfolgen, daß dieses als feines Pulver in das anneutralisierte, mit Wasser verdünnte Kunstharz-Bindemittel mit den bei der Lackfertigung üblichen Hilfsaggregaten eingearbeitet wird. Die notwendige feine Pigmentverteilung kann auch durch Naßvermahlung in einem geeigneten Mahlgerät erfolgen, wobei die Konzentration des Produktes von seiner Fließfähigkeit abhängt. Die Herstellung des Pulvers kann durch geeignetes Mahlen oder durch Ausfällen des wasserunlöslichen Drahtlackharzes aus organischen Lösungsmitteln mit Wasser erfolgen, wobei die Teilchengröße unter 20 $\mu$m, besonders unter 10 $\mu$m, bevorzugt unter 5 $\mu$m, liegen sollte.

Es können auch die Dispersion des wasserunlöslichen Drahtlackharzes und die Lösung des kationischen Kunstharz-Bindemittels getrennt und dann miteinander vermischt werden. In jedem Falle können geringe Mengen organischer Lösungsmittel zugesetzt werden.

Das kationische Kunstharz-Bindemittel hat vorzugsweise eine Aminzahl von 80 bis 150 und eine Hydroxylzahl von 100 bis 300, vorzugsweise von 200 bis 300. Besonders bevorzugt liegt die obere Grenze für die Aminzahl bei 120. Das kationische Bindemittel hat zweckmäßig ein mittleres Molekulargewicht ($\overline{Mn}$) von 500 bis 5000, vorzugsweise von mindestens 1500 und vorzugsweise von höchstens 4000. Besonders bevorzugt enthält es pro Molekül eine Aminogruppe, die einen $pK_b$-Wert von 2,5 bis 7,0 aufweist. (Der $pK_b$-Wert ist der negative dekadische Logarithmus der basischen Dissoziationskonstante.) Besonders gute Ergebnisse werden erzielt, wenn es mindestens zwei sekundäre und/oder primäre Aminogruppen pro Molekül enthält. Ist die Anzahl zu niedrig, so ist die Löslichkeit zu gering, oder es entstehen durch einen zu hohen Neutralisationsgrad zu saure pH-Werte in den Abscheidungsbädern. Ist die Aminzahl zu hoch, so entsteht eine schlecht haftende Filmbildung bei der Abscheidung oder eine blasige Oberfläche.

Für den Vernetzungsprozeß beim Einbrennen sind sekundäre und primäre Aminogruppen und/oder sekundäre und primäre Hydroxylgruppen, bevorzugt primäre Amino- und/oder Hydroxylgruppen erforderlich. Ist die Zahl dieser vernetzungsfähigen Gruppen zu klein, so ist die Vernetzung nach dem Einbrennen ungenügend; ist ihre Zahl zu hoch, so tritt eine Versprödung des Films ein. Dies ist dem Fachmann auf diesem Gebiet bekannt.

Den oben erwähnten Molekulargewichten entsprechen Viskositäten etwa zwischen 0,5 und 5,0 Pas nach Verdünnen mit Ethylenglykolmonobutylether auf 50 Gew.-% bei 25°C. Das geeignete mittlere Molekulargewicht bzw. die geeignete Viskosität können auch dadurch erhalten werden, daß Harze mit höherer und niedrigerer Viskosität bzw. Molekulargewicht vermischt werden.

Bevorzugt ist als kationisches Kunstharz-Bindemittel ein Reaktionsprodukt von Ketiminen oder Aldiminen, die zusätzlich mindestens eine sekundäre Aminogruppe enthalten, oder Diaminen mit 1,2-Epoxygruppen enthaltenden Polyglycidylethern. Zweckmäßig enthalten die Polyglycidylether mindestens zwei 1,2-Epoxygruppen pro Molekül. Sie können hergestellt werden durch

a) Einführen von Glycidylgruppen in alkalischem Medium über z. B. Epichlorhydrin,
   aa) in OH-funktionelle Harze, z. B. Epoxynovolacke, unter Bildung von Polyglycidylethern,
   ab) in COOH-funktionelle Harze unter Bildung von Polyglycidylestern, oder
   ac) in $NH_2$-funktionelle Harze unter Bildung von Polyglycidylaminen,
b) Einpolymerisieren von ungesättigten Glycidylmonomeren wie Glycidyl(meth)acrylat, N-Glycidyl-(meth)acrylamid oder Allylglycidylether mit anderen ungesättigten, copolymerisierbaren Monomeren wie Styrol und/oder (Meth)acrylsäureestern verschiedener Kettenlänge und/oder Hydroxyalkyl(meth)acrylaten, wobei die Alkylreste der Alkohole 1 bis 12 Kohlenstoffatome aufweisen (linear oder verzweigt).

Besonders bevorzugt gemäß a) ist, daß die 1,2-epoxidgruppenhaltigen Harze Polyglycidylether der allgemeinen Formel sind

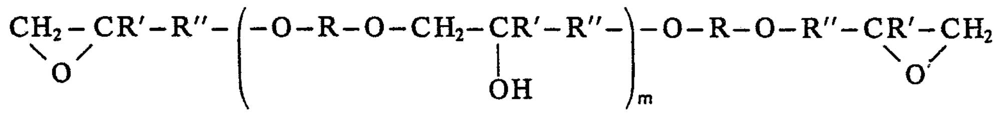

worin bedeuten

R = 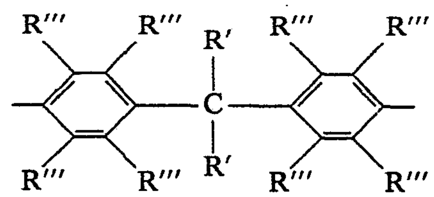

R' = Wasserstoff oder $-C_nH_{2n+1}$
R'' = $-(CR'_2)_n-$
R''' = R' oder Halogen, bevorzugt Wasserstoff
m = 0 bis 6
n = 1 bis 3

Sie haben ein mittleres Molekulargewicht ($\overline{Mn}$) von etwa 300 bis 2000 und ein Epoxyäquivalentgewicht von etwa 170 bis 1500. Solche Harze sind Umsetzungsprodukte von Epichlorhydrin mit Dioxydiphenylmethan (Bisphenol F) oder Dioxy-diphenylpropan (Bisphenol A). Es können auch entsprechende heteroxyclische Polyepoxyverbindungen verwendet werden, wie 1,3-Diglycidyl-5,5-dimethylhydantoin, Diepoxiden aus Bisimiden nach USP 34 50 711 oder auch 1,3,5-Triglycedylisocyanurat.

Die Einführung der Aminogruppen bzw. der Hydroxylgruppen erfolgt durch äquivalente Umsetzung der Epoxygruppen mit sekundären und/oder primären Monoaminen, Dialkylaminoalkylaminen, Monoalkylhydroxyalkylaminen, Dihydroxyalkylaminen oder geeigneten Ketiminen bzw. Aldiminen, oder durch Reaktion mit überschüssigen Alkylenpolyaminen, wie Ethylendiamin und Abdestillieren des Aminüberschusses. Beispiele für einsetzbare Verbindungen sind Diethylamin, Dimethylaminopropylamin, N-Methylaminoethanol, Diethanolamin, sowie geeignete Ketime oder Aldimine der nachfolgenden Formel

$$R_1-NH-(CH_2)_p-N = CR_2R_3$$

worin $R_1$ für eine der folgenden Gruppen steht:

$R_1$ = $-(CH_2)_q-CH_3$
$-(CH_2)_p-OH$
$-(CH_2)_p-N = CR_2R_3$

$R_2$ für Wasserstoff oder eine Alkylgruppe mit 1 bis 6 Kohlenstoffatomen, $R_3$ für eine Alkylgruppe mit 1 bis 6 Kohlenstoffatomen, p für eine ganze Zahl von 1 bis 8 und q für eine ganze Zahl von 0 bis 6 stehen.

Beispiele hierfür sind das Aldimin aus Methylaminopropylamin und Isobutyraldehyd, das Ketimin aus Diethylentriamin und Methylisobutylketon, oder das Ketimin aus Aminoethylethanolamin und Methylisobutylketon. Beim Lösen in Wasser hydrolysiert das Ketimin bzw. Aldimin, und die Schutzgruppe spaltet unter Bildung von primären Aminen ab. Unter der Definition »primäre Aminogruppen« werden also auch die durch Ketimin- oder Aldimingruppen geschützten Aminogruppen verstanden. Primäre Amine sind bei Reaktion mit Epoxygruppen difunktionell und reagieren deshalb unter Molekülvergrößerung. Andere einbaufähige Kettenverlängerungsmittel sind z. B. Polyalkohole wie Hexandiol-1,6,Bis-hydroxyäthylsulfon, Tris-(2-hydroxyethyl)-isocyanurat oder Dioxydiphenylpropan. Aus einem Mol Diamin wie Hexandiamin-1,6, Diaminodiphenylmethan oder amino-gruppenhaltigen Hydantoinen kann durch Umsetzung mit zwei Molen Glycidylether wie Phenylglycidylether oder Glycidylester wie der Glycidylester der Versaticsäure ein Diamin mit zwei sekundären Aminogruppen hergestellt werden. Mit Hilfe dieser Verbindungen ist es möglich, bei der Umsetzung mit überschüssigen Polyepoxiden tertiäre Aminogruppen in die Molekülmitte einzubauen, wodurch die Dispergierbarkeit verbessert wird, weil die durch Salzbildung entstehenden Ammoniumsalze über das ganze Molekül verteilt und nicht nur am Molekülende angeordnet sind. Durch Reaktion von überschüssigem Epoxid mit Diaminen, die zwei primäre oder eine primäre und eine sekundäre Aminogruppe enthalten, wie Diaminodiphenylmethan oder Methylaminopropylamin werden Verzweigungen in das Molekül eingebaut. Die Molverhältnisse zwischen epoxy- und aminogruppenhaltigen Verbindungen sind so zu wählen, daß der vollständige Einbau des Amins gewährleistet ist, weil sonst durchbruchartige Oberflächenstörungen beim elektrophoretischen Beschichten auftreten, d. h. ein geringfügiger Überschuß an Epoxygruppen ist vorteilhaft. Die Reaktion der Amine beginnt schon bei Raumtemperatur und ist im allgemeinen exotherm.

Sie kann durch Zusatz katalytischer Mengen schwacher Säuren (Phenole) oder Triphenylhposphin beschleunigt werden. Um eine vollständige Umsetzung zu erreichen, ist es in der Regel notwendig, die Temperatur zeitweise auf etwa 50 bis 150°C zu erhöhen. Das 1,2-epoxygruppenhaltige Harz wird vor Zugabe des Amins in wasserfreien organischen Lösungsmitteln wie Xylol, Methylisobutylketon, die später vor dem Verdünnen abdestilliert werden müssen, oder in Lösungsmitteln wie Ethylglykol, Diacetonalkohol oder Dimethyldiethylenglykolether, die in der Lösung bleiben können, gelöst. Die Reaktion der Polyalkohole mit den Epoxygruppen erfolgt in Gegenwart von Katalysatoren wie Dimethylbenzylamin, 1-Methylimidazol, 2-Ethyl-4-methylimidazol, oder Friedel-Crafts-Katalysatoren wie Borfluorid-Etherat bei Temperaturen von etwa 10 bis 150°C. Außerdem können Hydroxylgruppen durch Reaktion von Hydroxyalkylcarbonsäuren wie Hydroxyessigsäure, Milchsäure oder Dimethylolpropionsäure mit Epoxygruppen eingeführt werden.

Eine andere bekannte Ausführungsform zum Herstellen von Harzen mit sekundären und/oder primären Aminogruppen ist die Umsetzung mit niederen aliphatischen linearen oder verzweigten $C_2$ bis $C_6$-Alkylendiaminen oder Polyalkylendiaminen, z. B. Ethylendiamin oder Diethylentriamin, die besonders dann angebracht sind, wenn die für die Addition, Veresterung oder Umesterung notwendige Reaktionstemperatur so hoch sein muß, daß unerwünschte Nebenreaktionen wie die Zersetzung von Ketiminen ablaufen. Um Gelierungen zu vermeiden, wird erstens pro Epoxyäquivalent mit 1,1 bis 8 Mol Polyamin, bevorzugt 2 bis 6 Mol Polyamin-Überschuß gearbeitet und zweitens das Epoxyharz in das vorgelegte Polyamin zugegeben. Das Epoxyharz kann in fester, pulverisierter Form eingestreut oder als Lösung in einem organischen Lösungsmittel wie Xylol, Xylol-Butanol-Gemisch oder Methylisobutylketon zugegeben werden. Das Lösungsmittel und überschüssiges Amin muß dann unter Vakuum und Ausschluß von Sauerstoff sehr sorgfältig abdestilliert werden und kann beim nächsten Ansatz wieder eingesetzt werden. Um unkontrollierte Reaktionen bei veränderten Äquivalenzverhältnissen im Dampfraum zu vermeiden, sollte der Zulauf von Epoxyharz-Lösungen unter der Oberfläche unter sehr gutem Rühren erfolgen. Zur Entfernung von Aminresten ist gegebenenfalls ein Dünnschichtverdampfer, eine Wasserdampfdestillation oder ein Waschprozeß mit Wasser geeignet.

Als Komponente B wird für das Elektrotauchlack-Überzugsmittel gemäß der Erfindung ein mit der Komponente A verträgliches Drahtlackharz aus der Gruppe der Polyesterimide, Polyesteramidimide und/oder Polyhydantoine mit einem Schmelzpunkt (nach Kofler) über 60°C, bevorzugt über 90°C, in einer Menge von 50 bis 2000 Gewichtsteilen pro 100 Gewichtsteilen kationisches Kunstharz-Bindemittel (Komponente A) eingesetzt. Die obere Grenze des Schmelzpunkts ist bevorzugt 150°C, besonders bevorzugt 120°C.

Das Überzugsmittel gemäß der Erfindung enthält zweckmäßig auf 100 Gewichtsteile Komponente A mindestens 100, vorzugsweise mindestens 150 Gewichtsteile und höchstens 1000, vorzugsweise höchstens 500 Gewichtsteile B. Das nichtionische Kunstharz-Bindemittel ist bevorzugt ein Polyesterimid aus mehrwertigen aromatischen Carbonsäuren mit mindestens zwei orthoständigen Carboxylgruppen und mindestens einer weiteren funktionellen Gruppe, mehrwertigen Aminen, zwei- oder mehrwertigen Alkoholen und gegebenenfalls anderen aliphatischen und/oder aromatischen mehrwertigen Carbonsäuren. Diese Polyesterimide werden in großem Umfang als Bindemittel für Drahtlack-Überzugsmittel eingesetzt. Sie reagieren bei Raumtemperatur nicht mit sich selbst oder mit dem Trägerharz. Bei den üblichen Einbrennbedingungen schmelzen sie jedoch und vernetzen mit dem kationischen Kunstharz-Bindemittel zu einem verträglichen Film. Die Polyesterimide enthalten zweckmäßig bis zu 5 Gew.-% Stickstoff gebunden in fünfgliedrigen Imidringen.

Die einkondensierten Komponenten bzw. Ausgangsprodukte zur Herstellung der Polyesterimide können die gleichen sein wie bei den Polyesterimidharzen des Stands der Technik. Es wird dazu beispielsweise auf die oben erwähnten Veröffentlichungen verwiesen.

Einige geeignete Ausgangsprodukte werden nachfolgend aufgezählt, ohne daß diese Aufzählung beschränkende Wirkung haben soll.

Als Carbonsäure mit mindestens 2 orthoständigen Carboxylgruppen und mindestens einer weiteren funktionellen Gruppe wird bevorzugt Trimellithsäure und/oder deren Anhydrid eingesetzt. Beispiele für andere unter diese Gruppe fallende Säuren sind Pyromellithsäure, Benzophenontetracarbonsäure und deren Ester oder Anhydride. In der Regel sind die Anhydride bevorzugt.

Geeignete mehrwertige Amine sind Diaminodiphenylmethan, Diaminodiphenylpropan, Diaminodiphenylether, Diaminodiphenylsulfon, 2,5-Bis-(4'aminophenyl)-1,3,4-oxydiazole (vgl. DE-A 26 59 709) oder aminsubstituierte Hydantoine. Bevorzugt ist wie gemäß Stand der Technik das Diaminodiphenylmethan.

Als mehrwertige Alkohole werden Ethylenglykol, Propylenglykol, Diethylenglykol, 1,3-Bis-(2'-hydroxyethyl)-5,5-dimethylhydantoin (DE-A 23 42 415) und 1,3-Bis-(2'-hydroxyethyl)-benzimidazolon (DE-A 23 42 431) eingesetzt. Ethylenglykol wird wie nach dem Stand der Technik bevorzugt. Beispiele für Triole sind Glycerin, Tris-(2-hydroxyethyl)-isocyanurat (THEIC) und N,N',N''-Trishydroxyalkyltriazolidin-3,5-dion (DE-A 29 08 628). Besonders bevorzugt ist wie gemäß dem Stand der Technik THEIC, gegebenenfalls im Gemisch mit Ethylenglykol, wobei der Anteil an THEIC vorzugsweise 20 bis 60 Äquivalentprozent der Gesamtmenge der mehrwertigen Alkohole beträgt.

Die oben definierten anderen aliphatischen und/oder aromatischen mehrwertigen Carbonsäuren sind beispielsweise Terephthalsäure, Isophthalsäure, p-tert-Butylisophthalsäure, Adipinsäure, 1,2,3,4-Butantetracarbonsäure und 2-Aminoterephthalsäure bzw. gegebenenfalls deren Ester mit niederen aliphatischen Monoalkoholen, insbesondere Methanol oder Ethanol, oder Anhydride. Wie gemäß dem Stand der Technik ist das Dimethylterephthalat bevorzugt. Es können auch Gemische der jeweiligen Ausgangsverbindungen eingesetzt werden.

Die Polykondensation der Polyesterimide und Polyesteramidimide erfolgt wie gemäß dem Stand der Technik in der Schmelze durch mehrstündiges Erhitzen der Ausgangskomponenten auf etwa 140 bis 210°C. Zweckmäßig werden übliche Veresterungskatalysatoren zugesetzt: Metallsalze wie Zink-II-, Mangan-II- oder Cer-III-acetat, Zinn-II-oxalat, Metalloxide wie Antimontrioxid, Dibutylzinnoxid, Bleiglätte, Metallkomplexe wie Titansäurealkylester oder Metallaminkomplex-Katalysatoren nach DE-B 15 19 372. Bevorzugt sind wie gemäß Stand der Technik Zinkacetat und Butyltitanat. Die Rohstoffmengen werden so berechnet, daß das Äquivalenzverhältnis der Hydroxygruppen zu den Carboxylgruppen (bzw. den veresterten oder als Anhydride vorliegenden potentiellen Carboxylgruppen) zweckmäßig zwischen 1,4 und 2,5 liegt. Die untere Grenze liegt vorzugsweise bei etwa 1,8, die obere vorzugsweise bei 2,4. Die Herstellung kann auch stufenweise erfolgen, d. h. aus der mehrwertigen Carbonsäure, z. B. Trimellithsäure, und dem Amin wird eine Diimiddicarbonsäure hergestellt. Sie kann nach Isolierung und Reinigung oder unmittelbar aus der Reaktionslösung mit den weiteren Ausgangskomponenten zum Polyesterimidharz polykondensiert werden. Wird ein Überschuß Amin eingesetzt, erhält man bekanntlich Polyesteramidimide. Als Carboxylgruppen, die zur Berechnung des Äquivalenzverhältnisses zu den Hydroxyl- und gegebenenfalls Aminogruppen entsprechend der obigen Definition eingesetzt werden, werden nur diejenigen (gegebenenfalls veresterten, d. h. potentiellen) Carboxylgruppen verstanden, die noch für eine Veresterungsreaktion mit mehrwertigen Alkoholen oder eine Amidbildung mit Aminen zur Verfügung stehen. Die Herstellung der (amid-)imidmodifizierten Esterharze erfolgt also durch Veresterung der genannten mehrwertigen Carbonsäuren mit mehrwertigen Alkoholen. Es ist dabei auch möglich, die Herstellung von vorzubildenden heterozyklischen Carbonsäuren, z. B. Diimiddicarbonsäuren, und die Veresterung dieser Diimiddicarbonsäuren mit den mehrwertigen Alkoholen in einer Stufe in einem Gefäß durchzuführen, da die Aminogruppen mit orthoständigen Carboxylgruppen oder deren Anhydridgruppen z. B. der Trimellithsäure oder deren Anhydrid bevorzugt unter Bildung fünfgliedriger Imidringe reagieren, und deshalb für die Veresterung mit den Alkoholen nur diejenigen Carboxylgruppen der ursprünglich eingesetzten Carbonsäuren oder deren Anhydriden übrig bleiben, die nicht mit Aminogruppen unter Bildung von fünfgliedrigen Imidringen reagieren. Als mehrwertige Verbindungen für die Polyesterbildung werden also auch solche mehrwertigen Carbonsäuren, Alkohole oder Aminogruppen enthaltende Verbindungen verstanden, die fünfgliedrige Imidringe enthalten, und die sich also während der Reaktion der Ausgangskomponenten bilden können. Bei der Berechnung des Äquivalenzverhältnisses ist also eine derartige Diimiddicarbonsäure eine Polycarbonsäure, die zwei Carboxylgruppen aufweist, welche für die Berechnung des Äquivalenzverhältnisses berücksichtigt werden.

Bei zu niedrigem Gehalt an Komponente B verschlechtern sich die elektrischen und thermischen Eigenschaften der Lackdrähte; bei zu hohem Gehalt an Komponente B ist die Stabilität der wäßrigen Dispersion gefährdet. Es wird ein möglichst hoher Anteil an wasserunlöslichem Drahtlackharz angestrebt. Die Beladbarkeit des Trägerharzes (kationisches Kunstharz-Bindemittel) mit wasserunlöslichem Drahtlackharz nimmt im allgemeinen mit steigender Aminzahl zu. Das Verhältnis von Trägerharz zu Drahtlackharz bestimmt die Abscheidbarkeit beim Elektrotauchverfahren, d. h. mit zunehmendem Gehalt an Drahtlackharz steigt die abscheidbare Schichtdicke. Zur Abstimmung optimaler Eigenschaften können die verschiedenen Trägerharztypen und/oder die verschiedenen Drahtlackharze entweder allein oder als Gemisch mehrerer Harze eingesetzt werden.

Zur Verbesserung des Verlaufs und Erhöhung der Vernetzungsdichte können bis zu 30 Gew.-% der Komponente B durch andere verträgliche Zusatzharze ersetzt werden wie hydroxygruppenhaltige Polyester, Polyesteramide, blockierte Isocyanate und/oder auch gesättigte oder ungesättigte Kohlenwasserstoffharze. Bevorzugt ist eine Menge von höchstens 20, besonders höchsten 15, und mindestens 2 Gew.-%. Als OH-gruppenhaltige Polyester oder Polyesteramide dienen Polykondensate mit mindestens 2 OH-Gruppen pro Molekül aus insbesondere aromatischen Polycarbonsäuren, vorzugsweise Benzolpolycarbonsäuren mit 2 bis 4 Carboxylgruppen wie Isophthalsäure, Terephthalsäure(dimethylester) oder Trimellithsäure(anhydrid), und Polyalkoholen und/oder Polyaminen, wie sie oben genannt wurden. Bevorzugt werden carboxylgruppenhaltige Polyester oder Copolymerisate, deren Carboxylgruppen durch gegebenenfalls substituierte 1,2-Glykole unter Bildung von $\beta$-Hydroxyverbindungen blockiert werden:

$$\text{Harz}-\left(-COO-CH_2-\underset{\displaystyle OH}{\underset{|}{CH}}-R\right)_m$$

wobei R für

$$-CH_2-O-R' \qquad -CH_2-O-\underset{\underset{O}{\|}}{C}-R' \qquad -CH_2-NH-\underset{\underset{O}{\|}}{C}-R' \qquad -R' \qquad -H$$

steht

R′ = $-C_nH_{2n+1}$, $-C_mH_{2m+1}$, $-C_6H_5$
n = 1—20, bevorzugt 2—15
m = 2—10, bevorzugt 3—7 ist.

Die eingesetzten 1,2-Glykole können durch gesättigte oder ungesättigte Alkyl-, Ether- oder Amidgruppen substituiert sein. Beispiele für solche OH-Polyester sind Polyethylenglykol-terephthalat oder Polykondensat nach EP-A 12 463 aus Trimellithsäureanhydrid und dem Glycidylester der Versaticsäure mit OH-Zahlen bis 400.

Als blockierte Isocyanate werden Polyisocyanate mit mindestens zwei Isocyanatgruppen pro Molekül verwendet, deren Isocyanatgruppen mit monofunktionellen Verbindungen mit aktivem Wasserstoff umgesetzt werden. Die erhaltenen Harze sollen in der wässerigen Phase lagerstabil und in das Trägerharz einemulgierbar sein. Bei Wärmeeinwirkung nach Abspalten der Schutzgruppe reagieren sie mit den noch im Harzgemisch vorhandenen reaktiven OH- und/oder Aminogruppen. Als blockierte Polyisocyanate eignen sich die in der DE-A 30 02 865 beschriebenen Produkte, z. B. die Reaktionsprodukte aus Toluylendiisocyanat und 2-Ethylhexanol, aus Toluylendiisocyanat und Dimethylethanolamin, aus Toluylendiisocyanat, Trimethylolpropan und Kresol, aus Isophorondiisocyanat und Caprolactam oder aus einem biurethaltigen Trihexamethylisocyanat und Caprolactam.

Als hydrophobe polymere Substanz ohne funktionelle Gruppen, die das Verlaufen der Überzugsmasse begünstigt, können beispielsweise Ketonharze oder Kohlenwasserstoffharze wie Dicyclopentadienharze, Cumaron- oder Cumaron-Indenharze eingesetzt werden. Das Überzugsmittel kann übliche lacktechnische Zusatzstoffe wie Katalysatoren, Verlaufsmittel, Antischaummittel, Färbeharze usw. enthalten. Naturgemäß sind solche Zusatzstoffe auszuwählen, die mit Wasser bei saurem bis neutralem pH-Wert keine störenden Reaktionen eingehen, keine störenden Fremdionen, besonders niedermolekulare Kationen einschleppen und beim längeren Stehen nicht in nichtaufrührbarer Form ausfallen, d. h. auch nach längerem Stehen muß sich das Überzugsmittel durch Rühren und dergleichen in eine Dispersion überführen lassen.

Durch Protonisieren mit Säuren wird das kationische Kunstharz-Bindemittel in an sich bekannter Weise wasserlöslich gemacht. Beispiele für Säuren sind Salzsäure, Ameisensäure, Essigsäure, Milchsäure, Zitronensäure, Malonsäure, Acrylsäure, Glukonsäure, Phopshorsäure oder Alkylphosphorsäure. Es muß mindestens so viel Säure zugegeben werden, daß eine Lösung des kationischen Kunstharz-Bindemittels erfolgt. Ein Überschuß an Säure, d. h. ein Neutralisationsgrad über 100%, ist zweckmäßig zu vermeiden. Bevorzugt sind Ameisensäure, Essigsäure und Milchsäure.

Das Überzugsmittel kann zur Senkung der Viskosität, zur Steuerung der Abscheidespannung und zur Verbesserung der Haftung und des Verlaufs bis zu ungefähr 20 Gew.-% organische Lösungsmittel enthalten. Es wird ein möglichst niedriger Gehalt an organischen Lösungsmitteln angestrebt, besonders unter 15 Gew.-%, ganz besonders unter 10 Gew.-%. Als Lösungsmittel dienen Alkohole, Glykolether, Ketolalkohole, Ketone, Dimethylformamid, Dimethylsulfoxid, Dimethylacetamid, N-Methylpyrrolidon, Monophenylether vom Ethylenglykol, bzw. Propylenglykol, 1,1-Dioxathiolan, Ethylenglykol, Propylenglykol, Cyclohexanon oder aliphatische und aromatische Kohlenwasserstoffe verschiedener Kettenlänge. Bei der Auswahl muß berücksichtigt werden, daß die Drahtlackharze in der Dispersion nicht angelöst werden und Anteile von wasserunlöslichen Lösungsmitteln den Dispergiervorgang erleichtern und stabilisieren können. Mit steigendem Lösungsmittelgehalt verschlechtert sich der Umgriff und es können Überbeschichtungen auftreten; mit sinkendem Lösungsmittelgehalt verringert sich die abgeschiedene Schichtdicke.

Der Feststoffgehalt des Lackes, in dem das Überzugsmittel gemäß der Erfindung enthalten ist, beträgt nach Verdünnen mit Wasser zweckmäßig 5 bis 30 Gew.-%, vorzugsweise 10 bis 20 Gew.-%. Der pH-Wert des Lackes liegt im allgemeinen zwischen etwa 4,0 bis 7,5, vorzugsweise zwischen 5,0 und 7,0. Liegt der pH Wert zu hoch, so treten Dispergierschwierigkeiten auf, und das Harz fällt aus, liegt er zu niedrig, so korrodieren metallische Anlagenteile (Dampfphasenkorrosion).

Die elektrophoretische Abscheidung erfolgt zweckmäßig frühestens 24 Stunden nach Herstellung des Bades. Während dieser Zeit wird zweckmäßig kontinuierlich gerührt, um eine gleichmäßige Verteilung zu erreichen. Als Anode werden elektrisch leitfähige, nicht korridierende Elektroden z. B. aus nichtrostendem Stahl oder Graphit verwendet. Der kathodisch zu beschichtende Gegenstand und die Anode werden, wie für die elektrophoretische Abscheidung bekannt, in ein wäßriges Bad getaucht. Es können alle metallisch leitenden Werkstücke beschichtet werden, z. B. Kupfer, Aluminium, Zinn, Zink, Eisen und Legierungen dieser Metalle. Bevorzugt ist ein Verfahren zum Lackieren von elektrischen Leitern durch Beschichten mit dem Elektrotauchlack Überzugsmittel gemäß der Erfindung im Elektrotauchverfahren, wobei die zu beschichtenden elektrischen Leiter als Kathode geschaltet sind. Die Erfindung betrifft also auch die Verwendung des vorstehend definierten Elektrotauchlack-Überzugsmittels von als Kathode geschalteten elektrischen Leitern, insbesondere Kupferdrähten, durch Anlegen einer Spannung im Elektrotauchverfahren und anschließendes Einbrennen.

Während der Abscheidung wird das Bad bei Temperaturen von zweckmäßig etwa 15 bis 35° C gehalten. Festkörper, Abscheidetemperatur und -zeit, sowie Spannung werden so gewählt, daß die gewünschte Schichtstärke nach Abspülen und Einbrennen erhalten wird.

Beim Anlegen eines elektrischen Stroms mit einer Spannung von zweckmäßig 50 bis 400 Volt zwischen metallisch leitendem Werkstück und einer Gegenelektrode wird das wasserlösliche Trägerharz an der Kathode koaguliert. Es transportiert hierbei das wasserunlösliche Drahtlackharz mit. Die Beschichtungszeit in der Drahtlackiermaschine beträgt etwa 0,5 Sekunden bis 3 Minuten, besonders 2 bis 30 Sekunden. Hierbei verschiebt sich das Verhältnis von Trägerharz zum Drahtlackharz im abgeschiedenen Film, und zwar zugunsten des Drahtlackharzes. Gleichzeitig werden Wasser und die zur Neutralisation verwendete Säure im Bad angereichert. Zum Nachfüllen müssen daher konzentrierte Lacke gegebenenfalls mit niedrigerem Neutralisationsgrad verwendet werden, die diese Verschiebungen durch Änderung der Mengenverhältnisse ausgleichen. Diese Korrektur kann auch durch geeignete apparative Einrichtungen z. B. Ultrafiltration oder Elektrodialyseverfahren, erreicht werden.

Die Härtung erfolgt normalerweise durch 15 Minuten bis 1 Stunde langes Einbrennen bei etwa 160 bis 200° C Objekttemperatur. Bei kürzeren Verweilzeiten aus der Drahtlackiermaschine muß die Einbrenntemperatur erhöht werden. Praktische Erfahrungswerte sind 1 bis 3 Minuten bei einer Ofentemperatur von 300 bis 600° C. Durch Einarbeiten von z. B. 0,5 bis 5 Gew.-% Umesterungskatalysatoren kann die Einbrenntemperatur erniedrigt oder die Vollständigkeit der Umsetzung beschleunigt werden. Zusätzlich zu den schon erwähnten Katalysatoren können eingesetzt werden Ammoniumverbindungen wie Benzyltrimethylammoniumhydroxid, organische Zinnverbindungen wie Dibutylzinndilaurat, Titankomplexe wie Triethanolamintitanat, Bleioctoat oder Kobaltnaphthenat, Cyclopentadienthallium, sowie Acetylacetonate vom Zink, Eisen, Chrom oder Blei.

Kationisches Kunstharz-Bindemittel A 1

448 g Ethylenglykolmonobutylether werden in einem Dreihalskolben mit Rührer, Tropftrichter und Rückflußkühler auf 120° C erhitzt. Danach streut man 1056 g eines Polyglycidylethers auf Basis Bisphenol A mit einem Epoxy-Äquivalentgewicht von 482 (Epikote 1001®) portionsweise ein und rührt, bis alles gelöst. Nach Abkühlen auf 60° C werden 76,6 g Diethanolamin zugegeben und ein Anstieg der Temperatur über 62° C durch Kühlung verhindert. Es wird bei 60 ± 20° C gehalten, bis der kombinierte Epoxy- und Aminwert (Milliäquivalente pro Gramm Lösung) zwischen 1,38 und 1,40 liegt. Danach wird ein Gemisch von 37,2 g Dimethylaminopropylamin, 232 g eines Vorproduktes aus einem Mol Hexandiamin-1,6 und 2 Mol Glycidylester der Versaticsäure (Cardura E®) und 149 g Ethylenglykolmonobutylether schnell zugegeben, wobei die Temperatur auf etwa 90° C ansteigt. Zur Vervollständigung der Reaktion wird anschließend eine Stunde bei 90° C und dann eine Stunde bei 120° C gehalten.

| | |
|---|---|
| Festkörper: | 69,9 Gew.-% (40 Minuten Einbrennen bei 180° C) |
| Viskosität: | 3 Pas (nach Verdünnen auf 50 Gew.-% mit Ethylenglykolmonobutylether bei 25° C) |
| Aminzahl: | 84 mg KOH/g Festharz |
| Hydroxylzahl: | 287 mg KOH/g Festharz |

Kationisches Kunstharz-Bindemittel A 2

Vorprodukt

309 g eines Polyglycidylethers auf Basis Bisphenol A mit einem Epoxy-Äquivalentgewicht von 486 (Epikote 1001®) werden im Reaktionsgefäß unter Inertgas vorsichtig aufgeschmolzen. Unter Rühren werden dann 1085 g eines Polyglycidylethers auf Basis Bisphenol A mit einem Epoxy-Äquivalentgewicht von 607 (Epikote 1002®) so eingestreut, daß alles gelöst wird. Nach Zusatz von 0,3 g Triphenylphosphin und 105,7 g Versaticsäure wird ein bis zwei Stunden auf 150 bis 160° C erhitzt und diese Temperatur gehalten, bis die Säurezahl unter 1 mg KOH/g Festkörper ist. Das abgekühlte Harz wird in kleine Stücke zerschlagen.

Epoxy-Äquivalentgewicht: 855

Aminharz

In einem Reaktionsgefäß mit Rührer und Rückflußkühler werden unter Überleiten von Inertgas 424 g technisches Xylol und 262 g Ethylendiamin eingewogen und auf 80° C erwärmt. Unter schnellem Rühren wird dann das Vorprodukt portionsweise in etwa 4 Stunden eingestreut und anschließend bei 100° C zwei Stunden gehalten. Nach Heizen auf 160° C werden überschüssiges Ethylendiamin und Xylol abdestilliert, zum Schluß unter Vakuum. Die Entfernung von Aminresten erfolgte durch Wasserdampfdestillation. Das erhaltene Harz wurde mit Ethylenglykolmonobutylether auf 80 Gew.-% verdünnt.

| | |
|---|---|
| Festkörper: | 77,4 Gew.-% (nach 40 Minuten Erhitzen auf 180° C) |
| Viskosität: | 1,55 Pas (nach Verdünnen auf 50 Gew.-% mit Ethylenglykolmonobutylether bei 25° C) |
| Aminzahl: | 104 mg KOH/g Festharz |
| Hydroxylzahl: | 220 mg KOH/g Festharz |

Kationisches Kunstharz-Bindemittel A 3

In 660 g Ethylenglykolmonoethylether und 90 g Ethylhexanol werden 1605 g eines Polyglycidylethers auf Basis Bisphenol A mit einem Epoxy-Äquivalentgewicht von 243 (Epikote 834®) unter Erwärmen auf etwa 60° C und vorsichtigem Rühren gelöst. Nach Abkühlen auf 50° C werden 224 g Diethanolamin zugegeben und die exotherme Reaktion durch Kühlen auf etwa 60° C gehalten, bis der kombinierte Epoxy- und Aminwert bei 2,1 Milliäquivalente pro Gramm Lösung liegt. Danach werden 422 g Diaminodiphenylmethan zugegeben, zunächst eine Stunde bei 80° C und dann nach weiteren Erwärmen eine Stunde bei 120° C gehalten.

| | |
|---|---|
| Festkörper: | 79,5 Gew.-% (nach 40 Minuten Einbrennen bei 150° C unter Zusatz von 1 ml technischem Xylol) |
| Viskosität: | 2,2 Pas (nach Verdünnen auf 50 Gew.-% mit Ethylenglykolmonoethylether bei 25° C) |
| Aminzahl: | 125 mg KOH/g Festharz |

Kationisches Kunstharz-Bindemittel A 4

In 660 g Ethylenglykolmonoethylether und 90 g 2-Ethylhexanol werden 1446 g eines Polyglycidylethers auf Basis Bisphenol A mit einem Epoxy-Äquivalentgewicht von 243 unter Erärmen auf etwa 60° C und vorsichtigem Rühren gelöst. Nach Zusatz von 363 g Bisphenol A wird zwei Stunden unter Rückfluß erwärmt (etwa 150° C), wobei das Epoxy-Äquivalentgewicht auf 758 anstieg. Nach Kühlen auf 45° C wurden 441 g einer 80%igen Lösung von Methylaminopropylamin-methylisobutylketimin in Methylisobutylketon allmählich zugegeben. Anschließend wurde eine Stunde bei 80° C und danach eine Stunde bei 120° C gehalten, wobei 59 g Methylisobutylketon unter Vakuum abdestilliert wurden.

| | |
|---|---|
| Festkörper: | 73,7 Gew.-% (nach 40 Minuten Einbrennen bei 150° C unter Zusatz von 1 ml technischem Xylol) |
| Viskosität: | 3,6 Pas (nach Verdünnen auf 50 Gew.-% mit Ethylenglykolmonoethylether bei 25° C) |
| Aminzahl: | 78 mg KOH/g Festharz |

Kationisches Kunstharz-Bindemittel A 5

In 660 g Ethylenglykolmonoethylether und 90 g 2-Ethylhexanol werden 1632 g eines Polyglycidylethers auf Basis Bisphenol A mit einem Epoxy-Äquivalentgewicht von 243 (Epikote 834®) unter Erwärmen auf etwa 80° C und vorsichtigem Rühren gelöst. Nach Zusatz von 321 g Bisphenol A wird 1,5 Stunden unter Rückfluß erwärmt (etwa 146° C), wobei das Epoxy-Äquivalentgewicht auf 720 anstieg. Nach Kühlen auf 50° C wurden 297 g Dimethylaminopropylamin zugegeben. Anschließend wurde eine Stunde bei 80° C und nach weiterem Erwärmen eine Stunde bei 120° C gehalten.

| | |
|---|---|
| Festkörper: | 80,6 Gew.-% (nach 40 Minuten Einbrennen bei 150° C unter Zusatz von 1 ml technischem Xylol) |
| Viskosität: | 1,1 Pas (nach Verdünnen auf 50 Gew.-% mit Ethylenglykolmonoethylether bei 25° C) |
| Aminzahl: | 131 mg KOH/g Festharz |

Nichtionisches Kunstharz-Bindemittel B 1
(Polyestermid)

166,4 g (2,684 Mol) Ethylenglykol, 51 g (0,67 Mol) Propylenglykol, 493 g (1,89 Mol) Tris-(2-hydroxyethyl)-isocyanurat, 303 g (1, 56 Mol) Dimethylterephthalat werden zusammen in einen Dreihalskolben, versehen mit Rührer, Thermometer und Rektifizierkolonne, gegeben. Nach Zugabe von 1 g Zinkacetat wird unter Stickstoffatmosphäre aufgeheizt. Bei etwa 140 bis 150° C beginnt die Destillation des durch Umesterung freigesetzten Methanols. Nach etwa 3 Stunden sind 100 g Methanol abdestilliert; die Temperatur beträgt 210° C. Nach Abkühlen auf etwa 170° C werden 216,8 (1,13 Mol) Trimellithsäureanhydrid unter 111,8 g (0,565 Mol) Diaminodiphenylmethan zugesetzt und durch Erhitzen auf 200 bis 210° C einkondensiert, bis etwa 41 g Wasser abdestilliert sind.

Nach Abkühlen auf etwa 170° C werden erneut 216,8 g (1,13 Mol) Trimellithsäureanhydrid und 111,8 g (0,565 Mol) Diaminodiphenylmethan zugesetzt und durch Erhitzen auf 200 bis 210° C einkondensiert, bis etwa 41 g Wasser abdestilliert sind. Nach erneutem Abkühlen auf etwa 170° C werden weitere 216,8 g (1,13 Mol) Trimellithsäureanhydrid und 111,8 g (0,565 Mol) Diaminodiphenylmethan zugesetzt und bei 200 bis 210° C so lange kondensiert, bis weitere 41 g Wasser abdestilliert sind und die Säurezahl unter 10 gefallen ist. Bei 150° C werden 60 g Titanacetylacetonat als Katalysator eingerührt. Nach dem Erkalten hat das Polyesterimidharz einen Schmelzbereich (Kofler-Heizbank) von 95 bis 110° C. Viskosität: 1120 mPas (nach Verdünnen 1 Teil Festharz mit 2 Teilen m-Kresol bei 25° C). Für die Beispiele 2 bis 6 wird das Polyesterimidharz 70gew.-%ig in Dimethylformamid gelöst.

Nichtionisches Kunstharz-Bindemittel B 2
(Polyesteramidimid)

495 g (7,98 Mol) Ethylenglykol, 1466 g (5,62 Mol) Tris-(2-hydroxyethyl)isocyanurat, 582 g (3,0 Mol) Dimethylterephthalat werden zusammen in einen Dreihalskolben, versehen mit Rührer, Thermometer und Rektifizierkolonne, gegeben. Nach Zugabe von 30 g Zinkacetat wird unter Stickstoffatmosphäre aufgeheizt. Bei etwa 140 bis 150° C beginnt die Destillation des durch Umesterung freigesetzten Methanols. Nach etwa 3 Stunden sind 192 g Methanol abdestilliert. Nach Abkühlen auf etwa 140° C werden 427 g (2,57 Mol) Isophthalsäure zugesetzt und durch Erhitzen auf 200 bis 210° C einkondensiert, bis etwa 92 g Wasser abdestilliert sind. Nach Abkühlen auf etwa 170° C werden nun 576 g (3,0 Mol) Trimellithsäureanhydrid und 317 g (1,6 Mol) Diaminodiphenylmethan zugesetzt und durch Erhitzen auf 200 bis 210° C einkondensiert, bis etwa 54 g Wasser abdestilliert sind. Nach erneutem Abkühlen auf etwa 170° C werden weitere 576 g (3,0 Mol) Trimellithsäureanhydrid und 317 g (1,6 Mol) Diaminodiphenylmethan zugesetzt, und bei 200 bis 210° C so lange einkondensiert, bis weitere 54 g Wasser abdestilliert sind und die Säurezahl unter 12 gefallen ist. Bei 150° C werden 60 g Titanacetylacetonat als Katalysator eingerührt. Viskosität: 940 mPas (nach Verdünnen 1 Teil Festharz mit 2 Teilen m-Kresol bei 25° C). Nach dem Erkalten hat das Polyesteramidimidharz einen Schmelzbereich (Kofler-Heizbank) von 75 bis 105° C).

Zusatzharz C 1
(Polyester)

Gemäß EP-A 12 363, S. 17, Beispiel IIa, werden 781 g Trimellithsäureanhydrid bei 100° C in 1975 g Ethylenglykolmonobutylether gelöst und mit 2236 g eines Glycidylesters der Versaticsäure (Cardura E-10®), sowie 7 g Benzyldimethylamin vermischt. Diese Mischung wird auf 120° C unter Rühren erwärmt und gehalten, bis die Säurezahl unter 1,1 mg KOH/g gesunken ist. Der Polyester hat die Kennzahlen:

| | |
|---|---|
| Festkörper: | 70,7 Gew.-% (nach 60 Minuten Einbrennen bei 125° C) |
| Säurezahl: | 0,7 mg KOH/g Festharz |
| Epoxy-Äquivalentgewicht: | 10 000 |

Zusatzharz C 2
(blockiertes Isocyanat)

Zu 174 g Toluylendiisocyanat wird unter Rühren und äußerer Kühlung so langsam ein Gemisch von 260 g wasserfreiem 2-Ethylhexanol und 2 Tropfen Dibutylzinndilaurat gegeben, daß die Temperatur der Reaktionsmischung unter 50° C bleibt. Nach drei Stunden Rühren war der NCO-Gehalt Null.

Beispiel 1

214,3 g Trägerharz A 1 wurden mit 11,7 g einer 80gewichtsprozentigen Lösung von Milchsäure in Wasser neutralisiert und allmählich mit entionisiertem Wasser zu einer rührfähigen Paste verdünnt. Dann wurden 300 g Polyesterimidharz B 1 als Pulver zugegeben, und das Gemisch wurde in einer Perlmühle sorgfältig dispergiert. Nach Abfiltrieren der Glasperlen wurde mit entionisiertem Wasser auf einen Feststoffgehalt von 22 Gew.-% verdünnt. (Der Feststoffgehalt wurde ermittelt durch 25 Minuten langes Erhitzen auf 180° C.) Der pH-Wert des Bades wurde auf 5,0 eingestellt.

Ein Kupferdraht (Durchmesser 1,0 mm) wurde durch ein Bad mit dem vorstehend beschriebenen Überzugsmittel gezogen, wobei der Draht als Kathode geschaltet war. Als Anode dient ein Blech aus nichtrostendem Stahl. Die Abzugsgeschwindigkeit des Kupferdrahtes wurde so eingestellt, daß die Abscheidung 2 Minuten lang erfolgte. Die Temperatur des Bades betrug 25° C, und das Bad wurde durch Rühren kräftig bewegt, um eine gleichmäßige Verteilung der Bestandteile zu gewährleisten. Die angelegte Spannung betrug 240 V. Nach Verlassen des Bades wurde der Draht mit Wasser abgespült, zur Trocknung zunächst 5 Minuten auf 100° C Objekttemperatur vorgewärmt und dann 30 Minuten auf 200° C Objekttemperatur erhitzt, um den Film einzubrennen. Es wurde ein glatter Überzug in einer Stärke von 45 µm erhalten.

Beispiel 2

1914 g Trägerharz A 1, 5487 g Polyesterimidharzlösung (70 Gew.-%) B 1 und 633 g Polyester C 1 werden bei etwa 80° C aufgeschmolzen und mit 296 g 80%iger Milchsäure (gelöst in Wasser) neutralisiert. Die Dispersion wird durch langsamen Zusatz von 16,6 kg entionisiertem Wasser unter Rühren mit dem Dissolver hergestellt. 90% der ausgefällten Teilchen hatten eine Teilchengröße unter 15 µm.

Festkörper: 21,9 Gew.-% (nach 30 Minuten Erhitzen auf 180° C).

Die Drahtlackierung erfolgte auf einer Drahtlackiermaschine unter folgenden Bedingungen:

| | |
|---|---|
| Lackiergeschwindigkeit: | 8 m/Min. |
| Spannung: | 20 Volt |
| Abscheidezeit: | 5,6 Sekunden |
| Badtemperatur: | 25° C |
| Einbrenntemperatur: | 450° C |
| Einbrennzeit: | 6 Minuten |
| Lackzunahme: | 45 bis 50 µm |
| Kupferdraht-Durchmesser: | 1 mm |

Beispiel 3

153 g Trägerharz A 3, 476 g Polyesterimidharzlösung (70 Gew.-%) B 1 und 56 g Polyester C 1 werden bei etwa 80° C aufgeschmolzen und mit 17 g 80%iger Milchsäure neutralisiert. Die Lackdispersion wird mit dem Dissolver durch vorsichtigen Zusatz von 1,3 kg entionisiertem Wasser hergestellt.

Festkörper: 22,6 Gew.-% (nach 30 Minuten Einbrennen bei 180° C)

Beispiel 4

167 g Trägerharz A 4, 476 g Polyesterimidharzlösung (70 Gew.-%) B 1 und 56 g Polyester C 1 werden bei etwa 80° C aufgeschmolzen und mit 15 g 80%iger Milchsäure neutralisiert. Die Lackdispersion wird mit dem Dissolver langsam durch allmählichen Zusatz von 1,28 kg entionisiertem Wasser hergestellt.

Festkörper: 22,6 Gew.-% (nach 30 Minuten Einbrennen bei 180° C)

Beispiel 5

206,8 g Trägerharz A 5, 476 g Polyesterimidharzlösung (70 Gew.-%) B 1 und 25,0 g blockiertes Isocyanat C 2 werden bei etwa 80° C vorsichtig aufgeschmolzen und mit 19,4 g 80%iger Milchsäure neutralisiert. Die Lackdispersion wird mit dem Dissolver langsam durch allmählichen Zusatz von 4,5 kg entionisiertem Wasser und 15,8 g Diethylenglykolmonobutylether hergestellt.

Festkörper: 10,0 Gew.-% (nach 30 Minuten Einbrennen bei 180° C)

Beispiel 6

208 g Trägerharz A 2, 476 g Polyesterimidharzlösung (70 Gew.-%) B 1 und 25,0 g blockiertes Isocyanat C 2 werden bei etwa 80° C vorsichtig aufgeschmolzen und mit 19,4 g 80%iger Milchsäure neutralisiert. Die Lackdispersion wird mit dem Dissolver langsam durch allmählichen Zusatz von 4,5 kg Wasser und 15,8 g Diethylenglykolmonobutylether hergestellt.

Festkörper: 10,0 Gew.-% (nach 30 Minuten Einbrennen bei 180°)

Beispiel 7

Es wird wie im Beispiel 4 beschrieben gearbeitet, wobei die Polyesterimidharzlösung durch 476 g Polyesteramidimidharzlösung (70 Gew.-%) $B_2$ ersetzt ist und zur Neutralisation 14 g Milchsäurelösung verwendet werden. Es wird mit 2,3 kg entionisiertem Wasser verdünnt.

Festkörper: 15 Gew.-% (nach 30 Minuten Einbrennen bei 180° C)

In der Tabelle 1 sind die Daten für die Abscheidung nach Beispielen 3 bis 7 zusammengefaßt.

Tabelle 1

| | Beispiel 3 | Beispiel 4 | Beispiel 5 | Beispiel 6 | Beispiel 7 |
|---|---|---|---|---|---|
| Badfestkörper (%) | 22,6 | 22,6 | 10,0 | 10,0 | 15 |
| pH-Wert | 3,5 | 4,7 | 4,6 | 3,8 | 5,1 |
| Badleitfähigkeit ($\mu Scm^{-1}$) | 719 | 660 | 723 | 665 | 630 |
| Abscheidespannung (V) | 150 | 150 | 150 | 150 | 200 |
| Abscheidezeit (Min.) | 2 | 2 | 1 | 2 | 0,5 |
| Badtemperatur (° C) | 25 | 25 | 35 | 35 | 25 |
| Einbrenntemperatur (° C) | 180 | 180 | 180 | 180 | 180 |
| Einbrennzeit (Min.) | 30 | 30 | 30 | 30 | 30 |
| Schichtdicke (μm) | 45 | 52 | 52 | 42 | 55 |
| MEQ-Wert | 92,0 | 81,0 | 90,0 | 90,0 | 75 |

**Patentansprüche**

1. Kathodisch abscheidbares, wäßriges Elektrotauchlack-Überzugsmittel, das ein kationisches Kunstharz-Bindemittel, welches durch Protonisieren mit Säuren wasserlöslich gemacht werden kann, und ein nichtionisches Kunstharz-Bindemittel enthält, dadurch gekennzeichnet, daß es

A. als kationisches Kunstharz-Bindemittel ein aminogruppenhaltiges Trägerharz mit einer Aminzahl von 50 bis 200 und einer Hydroxylzahl von 50 bis 400,
B. als nichtionisches Kunstharz-Bindemittel ein wasserunlösliches Drahtlackharz aus der Gruppe Polyesterimide, Polyesteramidimide und Polyhydantoine mit einem Schmelzpunkt über 60° C in

einer Menge von 50 bis 2000 Gewichtsteilen pro 100 Gewichtsteile Komponente A, und

C. in Wasser im wesentlichen stabile Umesterungskatalysatoren in einer Menge von 0,1 bis 5 Gewichtsteilen pro 100 Gewichtsteile der Summe der Komponenten A und B

enthält.

2. Elektrotauchlack-Überzugsmittel nach Anspruch 1, dadurch gekennzeichnet, daß es auf 100 Gewichtsteile Komponente A mindestens 100, vorzugsweise mindestens 150 Gewichtsteile Komponente B enthält.

3. Elektrotauchlack-Überzugsmittel nach Anspruch 1, dadurch gekennzeichnet, daß es auf 100 Gewichtsteile Komponente A höchstens 1000, vorzugsweise höchstens 500 Gewichtsteile Komponente B enthält.

4. Elektrotauchlack-Überzugsmittel nach Anspruch 1, dadurch gekennzeichnet, daß die Komponente A eine Aminzahl von 80 bis 150 und eine Hydroxylzahl von 100 bis 300 hat.

5. Elektrotauchlack-Überzugsmittel nach einem oder mehreren der Ansprüche 1 bis 4, dadurch gekennzeichnet, daß das kationische Kunstharz-Bindemittel mindestens 2 sekundäre und/oder primäre Aminogruppen pro Molekül enthält.

6. Elektrotauchlack-Überzugsmittel nach Anspruch 5, dadurch gekennzeichnet, daß das kationische Kunstharz-Bindemittel ein Reaktionsprodukt von Ketiminen oder Aldiminen, die zusätzlich mindestens eine sekundäre Aminogruppe enthalten, oder Diaminen mit 1,2-Epoxygruppen enthaltenden Polyglycidylethern ist.

7. Elektrotauchlack-Überzugsmittel nach einem oder mehreren der Ansprüche 1 bis 6, dadurch gekennzeichnet, daß das nichtionische Kunstharz-Bindemittel (Komponente B) ein Polyesterimid oder Polyesteramidimid aus mehrwertigen aromatischen Carbonsäuren mit mindestens 2 orthoständigen Carboxylgruppen und mindestens einer weiteren funktionellen Gruppe, mehrwertigen Aminen, zwei- und mehrwertigen Alkoholen und gegebenenfalls anderen aliphatischen und/oder aromatischen mehrwertigen Carbonsäuren ist.

8. Elektrotauchlack-Überzugsmittel nach Anspruch 7, dadurch gekennzeichnet, daß die mehrwertige aromatische Carbonsäure mit mindestens zwei orthoständigen Carboxylgruppen und mindestens einer weiteren funktionellen Gruppe Trimellithsäure oder deren Anhydrid ist.

9. Elektrotauchlack-Überzugsmittel nach einem oder mehreren der Ansprüche 7 bis 8, dadurch gekennzeichnet, daß das mehrwertige Amin Diaminodiphenylmethan ist.

10. Elektrotauchlack-Überzugsmittel nach einem oder mehreren der Ansprüche 1 bis 9, dadurch gekennzeichnet, daß die zwei- und mehrwertigen Alkohole ein Gemisch aus Ethylenglykol und gegebenenfalls Propylenglykol sowie Tris-(2-hydroxyethyl)-isocyanurat (THEIC) sind, wobei der Anteil an THEIC vorzugsweise 20 bis 60 Äquivalentprozent der Gesamtmenge der mehrwertigen Alkohole beträgt.

11. Elektrotauchlack-Überzugsmittel nach einem oder mehreren der Ansprüche 1 bis 10, dadurch gekennzeichnet, daß die aliphatischen und/oder aromatischen mehrwertigen Carbonsäuren Adipinsäure und/oder Therephthalsäure oder deren Methylester sind.

12. Verwendung des Elektrotauchlack-Überzugsmittels gemäß Ansprüchen 1 bis 11 zum Beschichten von als Kathode geschalteten elektrischen Leitern, insbesondere Kupferdrähten, durch Anlegen einer Spannung im Elektrotauchverfahren und anschließendes Einbrennen.

13. Verfahren zum Lackieren von elektrischen Leitern, insbesondere Kupferdrähten, durch Beschichten mit einem hitzehärtbaren Lacküberzugsmittel und Erhitzen auf Objekttemperaturen über 160° C, vorzugsweise über 200° C, dadurch gekennzeichnet, daß man die Beschichtung mit einem Elektrotauchlack-Überzugsmittel gemäß Anspruch 1 im Elektrotauchverfahren durchführt, wobei die zu beschichtenden elektrischen Leiter als Kathode geschaltet sind.

**Claims**

1. An aqueous electrophoretic enamel coating agent which may be deposited cathodically and which contains a cationic synthetic resin binder which may be rendered water-soluble by protonisation with acids, and also contains a non-ionic synthetic resin binder, characterized in that it contains

A. a carrier resin containing amino groups and having an amine number of from 50 to 200, and an hydroxyl number of from 50 to 400, as the cationic synthetic resin binder,

B. a water-insoluble wire enamel resin selected from the group of polyesterimides, polyesteramideimides and and polyhydantoins having a melting point of above 60° C, in a quantity of from 50 to 2000 parts by weight, per 100 parts by weight of component A as the nonionic synthetic resin binder, and

C. transesterification catalysts which are substantially stable in water, in a quantity of from 0,1 to 5 parts by weight per 100 parts by weight of the total of components A and B.

2. An electrophoretic enamel coating agent according to claim 1, characterized in that it contains at

least 100, preferably at least 150 parts by weight of component B per 100 parts by weight of component A.

3. An electrophoretic enamel coating agent according to claim 1, characterized in that it contains at the most 1000, preferably at the most 500 parts by weight of component B per 100 parts by weight of component A.

4. An electrophoretic enamel coating agent according to claim 1, characterized in that component A has an amine number of from 80 to 150 and an hydroxyl number of from 100 to 300.

5. An electrophoretic enamel coating agent according to one or more of claims 1 to 4, characterized in that the cationic synthetic resin binder contains at least two secondary and/or primary amino groups per molecule.

6. An electrophoretic enamel coating agent according to claim 5, characterized in that the cationic synthetic resin binder is a reaction product of ketimines or aldimines which also contain at least one secondary amino group, or is a reaction product of diamines with polyglycidyl ethers containing 1,2-epoxy groups.

7. An electrophoretic enamel coating agent according to one or more of claims 1 to 6, characterized in that the non-ionic synthetic resin binder (component B) is a pol esterimide or polyesteramideimide of polybasic aromatic carboxylic acids having at least two orthopositioned carboxyl groups and at least one other functional group, polyvalent amines, dihydric and polyhydric alcohols and optionally other aliphatic and/or aromatic polybasic carboxylic acids.

8. An electrophoretic enamel coating agent according to claim 7, characterized in that the polybasic aromatic carboxylic acid having at least two ortho-positioned carboxyl groups and at least one other functional group is trimellitic acid or the anhydride thereof.

9. An electrophoretic enamel coating agent according to one or more of claims 7 to 8, characterised in that the polyvalent amine is diaminodiphenyl methane.

10. An electrophoretic enamel coating agent according to one or more of claims 1 to 9, characterized in that the dihydric and polyhydric alcohols are a mixture of ethylene glycol and optionally propylene glycol and THEIC, and the proportion of THEIC preferably amounts to from 20 to 60 equivalent % of the total quantity of the polyhydric alcohols.

11. An electrophoretic enamel coating agent according to one or more of claims 1 to 10, characterized in that the aliphatic and/or aromatic polybasic carboxylic acids are adipic acid and/or terephthalic acid or methyl esters thereof.

12. The use of the electrophoretic enamel coating agent according to claims 1 to 11 for coating electrical conductors which are connected as a cathode, in particular copper wires, by applying a voltage in the electro-dipping process and by a subsequent baking operation.

13. A process for enamelling electrical conductors, in particular copper wires, by coating with a heathardenable enamel coating agent and heating to workpiece temperatures above 160° C, preferably above 200° C, characterised in that the coating is effected with an electrophoretic enamel coating agent according to claim 1 in the electro-dipping process, and the electrical conductors to be coated are connected as the cathode.

**Revendications**

1. Produit de revêtement aqueux pour application par électrodéposition à la cathode, contenant un liant de résine synthétique cationique qu'on peut rendre soluble à l'eau par protonisation à l'aide d'acides, et un liant de résine synthétique non-ionique, caractérisé en ce qu'il contient

A. en tant que liant de résine synthétique cationique une résine véhicule portant des groupes amino et présentant un indice d'amine de 50 à 200 et un indice d'hydroxyle de 50 à 400,
B. en tant que liant de résine synthétique non-ionique une résine pour vernis de fil métallique, insoluble dans l'eau, du groupe des pol ester-imides, des polyester-amide-imides et des polyhydantoïnes ayant un point de fusion supérieur à 60° C en quantité de 50 à 2000 parties en poids pour 100 parties en poids du composant A, et
C. des catalyseurs de transestérification essentiellement stables dans l'eau en quantité de 0,1 à 5 parties en poids pour 100 parties en poids de la somme des composants A et B.

2. Produit de revêtement pour application par électrodéposition selon la revendication 1, caractérisé en ce qu'il contient au moins 100, de préference au moins 150 parties en poids du composant B pour 100 parties en poids du composant A.

3. Produit de revêtement pour application par électrodéposition selon la revendication 1, caractérisé en ce qu'il contient au maximum 1000, de préference au maximum 500 parties en poids du composant B pour 100 parties en poids du composant A.

4. Produit de revêtement pour application par électrodéposition selon la revendication 1, caractérisé en ce que le composant A a un indice d'amine de 80 à 150 et un indice d'hydroxyle de 100 à 300.

5. Produit de revêtement pour application par électrodéposition selon une ou plusieurs des revendications 1 à 4, caractérisé en ce que le liant de résine synthétique cationique contient au moins deux groupes amino secondaires et/ou primaires par molécule.

6. Produit de revêtement pour application par électrodéposition selon la revendication 5, caractérisé en ce que le liant de résine synthétique cationique est un produit de réaction de cétimines ou d'aldimines contenant en outre au moins un groupe amino secondaire, ou de diamines, avec des éthers polyglycidyliques contenant des groupes 1,2-époxy.

7. Produit de revêtement pour application par électrodéposition selon une ou plusieurs des revendications 1 à 6, caractérisé en ce que le liant de résine synthétique non-ionique (composant B) est un polyester-imide ou un polyester-amide-imide d'acides carboxyliques aromatiques polyvalents portant au moins deux groupes carboxyle en position ortho et au moins un autre groupe fonctionnel, d'amines polyvalentes, d'alcools di- et poly-valents et le cas échéant d'autres acides carboxyliques aliphatiques et/ou aromatiques polyvalents.

8. Produit de revêtement pour application par électrodéposition selon la revendication 7, caractérisé en ce que l'acide carboxylique aromatique polyvalent portant au moins deux groupes carboxyle en position ortho et ou moins un autre groupe fonctionnel est l'acide trimellitique ou son anhydride.

9. Produit de revêtement pour application par électrodéposition selon une ou plusieurs des revendications 7 et 8, caractérisé en ce que l'amine polyvalente est le diaminodiphénylméthane.

10. Produit de revêtement pour application par électrodéposition selon une ou plusieurs des revendications 1 à 9, caractérisé en ce que les alcools di- et poly-valents consistent en un mélange d'éthylèneglycol et le cas échéant de propylène-glycol et de THEIC, représentant de préférence de 20 à 60 équivalente pour cent de la quantité totale des alcools polyvalents.

11. Produit des revêtement pour application par électrodéposition selon une ou plusieurs des revendications 1 à 10, caractérisé en ce que les acides carboxyliques aliphatiques et/ou aromatiques polyvalents consistent en l'acide adipique et/ou l'acide téréphtalique ou leurs esters méthyliques.

12. Utilisation du produit de revêtement pour application par électrodéposition selon les revendications 1 à 11 pour le revêtement de conducteurs électriques montés en cathode, en particulier de fils de cuivre, par application d'une tension, selon la technique d'électrodéposition en immersion, avec cuisson subséquente.

13. Procédé pour vernir des conducteurs électriques, en particulier des fils de cuivre, par revêtement à l'aide d'un produit de revêtement thermodurcissable et chauffage à des températures d'objet supérieures à 160° C, de préférence supérieures à 200° C, caractérisé en ce que l'on procède au revêtement à l'aide d'un produit de revêtement pour application par électrodéposition selon la revendication 1, en montant les conducteurs électriques à revêtir en cathodes.